# EUROPÄISCHE PATENTSCHRIFT

(11) **EP 1 172 389 B1**
(45) Veröffentlichungstag und Bekanntmachung des Hinweises auf die Patenterteilung: **18.08.2004**
(21) Anmeldenummer: 01115622.1
(22) Anmeldetag: 03.07.2001
(51) Int. Cl.: C08G 18/69, C08G 18/08, C08G 18/12, C09D 175/14

(54) **Wässrige Polyurethandispersionen enthaltend Polybutadien-Bausteine**
Aqueous polyurethane dispersions containing polybutadiene elements
Dispersions aqueuses de polyuréthane contenant des composants de polybutadiène

(30) Priorität: 12.07.2000 DE 10033851
(43) Veröffentlichungstag der Anmeldung: 16.01.2002
(73) Patentinhaber: Surface Specialties Austria GmbH, 8402 Werndorf (AT)
(72) Erfinder: Schafheutle, Markus A., Dr., 8044 Graz (AT); Arzt, Anton, 8430 Neutillitsch (AT); Burkl, Julius, 8053 Graz (AT); Glettler, Martina, 8041 Graz (AT); Meisner, Ursula, 8041 Graz (AT); Petritsch, Gerlinde, 8054 Graz (AT); Wango, Jörg, 8142 Wundschuh (AT)
(74) Vertreter: Deckers, Hellmuth, Dr.

(56) Entgegenhaltungen:
- FR-A- 2 776 662
- US-A- 5 965 195
- DATABASE WPI Section Ch, Week 199252 Derwent Publications Ltd., London, GB; Class A25, AN 1992-427929 XP002179924 & JP 04 323292 A (SAN SUTA GIKEN KK), 12. November 1992 (1992-11-12)

## Beschreibung

Die Erfindung betrifft wäßrige Polyurethandispersionen, die Polybutadien-Bausteine enthalten, und die erhältlich sind durch Umsetzung von mehrfunktionellen Isocyanaten, funktionalisierten Polybutadienen und funktionalisierten hydrophilen Agenzien, wobei die funktionellen Gruppen der beiden letztgenannten Edukte mit Isocyanaten unter Bildung von kovalenten Bindungen reagieren.

Zur Beschichtung von flexiblen Substraten und zur Herstellung elastischer Beschichtungen ist es wünschenswert, Beschichtungsfilme mit niedriger Glastemperatur herstellen zu können.

Polyurethandispersionen, die von Polybutadien abgeleitete Strukturen enthalten, sind bereits bekannt. In der US-A 5,672,653 werden anionische Polyurethandispersionen beschrieben, die hergestellt werden aus hydroxyfunktionellen Polybutadienen, gegebenenfalls in Kombination mit anderen weniger hydrophoben Polyolen, aliphatischen Isocyanaten wie beispielsweise Isophorondiisocyanat und einem Diol, das Säuregruppen enthält, wie Dimethylolpropionsäure. Dabei wird aus diesen Edukten zunächst ein Präpolymer hergestellt, das mit einem tertiären Amin neutralisiert wird, wobei eine zur Neutralisation ausreichende Menge des Neutralisierungsmittels zugesetzt wird, diesem neutralisierten Präpolymer wird erst Wasser und dann ein Kettenverlängerungsmittel zugesetzt. Diese Polyurethan-Dispersionen enthalten jedoch stets Reste des als Lösungsmittels verwendeten N-Methylpyrrolidon, das wegen seiner geringen Flüchtigkeit nicht vollständig zu entfernen ist. Bei Kombination mit den weniger hydrophoben Diolen ergeben sich Beschichtungen, deren Hydrolysefestigkeit nicht ausreichend ist. Auch ist die Stabilität der gebildeten Präpolymeren nicht befriedigend: sie weisen bereits von sich aus einen hohe Viskosität auf und vergelen innerhalb kurzer Zeit.

Die FR-A 2 776 662 hat sich zur Aufgabe gemacht, diese Unzulänglichkeiten zu verbessern. Dabei wird im ersten Schritt das Säuregruppen enthaltende Diol mit der stöchiometrischen Menge eines Neutralisationsmittels neutralisiert, anschließend in Methyläthylketon gelöst und mit einem Polyisocyanat sowie einem Polydien mit endständigen Hydroxylgruppen umgesetzt, wobei die Zahl der Isocyanatgruppen die der Hydroxylgruppen übertrifft, im dritten Schritt wird das Präpolymer in Wasser dispergiert, anschließend wird ein Kettenverlängerer vom Diamintyp zugefügt und dann das Lösungsmittel entfernt. Das so erhaltene Präpolymer des zweiten Schrittes ist erheblich niederviskoser und vergelt nicht wie das der genannten US-Schrift, zeigt jedoch auch einen erheblichen Anstieg der Viskosität auf das 24fache innerhalb von 14 Tagen Lagerzeit. Das leichter flüchtige Lösungsmittel Methyläthylketon läßt sich nahezu vollständig entfernen.

In den Untersuchungen, die der vorliegenden Erfindung zugrundelagen, wurde nun gefunden, daß die Stabilität der erhaltenen Polyurethan-Dispersionen bei Lagerung noch verbessert werden kann, indem das Säuregruppen enthaltende Diol nur zum Teil neutralisiert wird. Dank dieser verbesserten Stabilität auch des Präpolymeren läßt sich die Kettenverlängerung bei erhöhter Temperatur durchführen, ohne daß eine Vergelung zu befürchten ist. Die bei der Kettenverlängerung auftretenden Wärmetönung unterstützt in Verbindung mit der ohnehin höheren Temperatur die Destillation des Lösungsmittels, so daß ein geringerer Lösungsmittelgehalt - und wegen der gleichzeitigen Entfernung eines Teils des Wassers - ein höherer Festkörper-Massenanteil ohne zusätzlichen Energieaufwand erreicht werden kann. Trotz dem höheren Festkörper-Massenanteil sind die erhaltenen Dispersionen lagerstabil und zeigen keinen Viskositätsanstieg bei Lagerung.

Gegenstand der vorliegenden Erfindung sind daher lagerstabile Polyurethan-Dispersionen, herstellbar durch Umsetzung von Polydienen **A**, die mindestens zwei mit Isocyanaten reaktive Gruppen tragen, Polyolen **B**, die mindestens eine Säuregruppe tragen, mehrfunktionellen Isocyanaten **C** und Kettenverlängerungsmitteln **D**, dadurch gekennzeichnet, daß die Polyole **B** zu einem Anteil von 60 bis 95 % neutralisiert sind.

Bevorzugt wird die Neutralisation der Polyole **B** vor der Umsetzung mit den Isocyanaten **C** vorgenommen. Der Anteil der neutralisierten Säuregruppen von **B** beträgt bevorzugt 65 bis 90, insbesondere 70 bis 85 %.

Die Polydiene **A** sind insbesondere Telechele, d. h. sie tragen reaktive Gruppen an den Kettenenden. Bevorzugt sind Polydiene mit zwei reaktiven Gruppen, die ausgewählt sind aus Hydroxylgruppen, Aminogruppen oder Mercaptogruppen, und die mit Isocyanaten unter Bildung von Urethanen, Harnstoffen oder Thiourethanen reagieren. Sie werden hergestellt insbesondere durch radikalisch initiierte Polymerisation von aliphatischen linearen, verzweigten oder cyclischen Verbindungen mit mindestens zwei konjugierten Doppelbindungen und 4 bis 20 Kohlenstoffatomen. Als Initiator werden solche Radikalbildner eingesetzt, die beispielsweise Hydroxylgruppen am Kettenende erzeugen, wie Wasserstoffperoxid, oder Azoverbindungen wie 2,2'-Azobis-(2-methyl-N-(2-hydroxyäthyl)-propionamid). Eine andere Weise zur Erzeugung der Polydienen ist die anionische Polymerisation, beispielsweise gestartet mit Dilithiumnaphthalin. Bei Abbruch der Polymerisation läßt sich die Endgruppe durch geeignete Wahl der Abbruchmittel bestimmen. Geeignete ungesättigte Kohlenwasserstoffe sind besonders Diene, wie Butadien, Isopren, Chloropren, 1,3-Pentadien und Cyclopentadien, diese lassen sich auch in Mischung copolymerisieren. Besonders bevorzugt werden Polybutadiene mit 2 Hydroxylgruppen als Endgruppen, insbesondere solche mit einer zahlenmittleren molaren Masse Mₙ von ca. 1000 bis 15 000 g/mol.

Als Polyole B mit mindestens einer Säuregruppe werden Dihydroxycarbonsäuren mit 4 bis 8 Kohlenstoffatomen wie Bishydroxymethylpropionsäure und Bishydroxymethylessigsäure oder Weinsäure bevorzugt. Ebenso geeignet sind beispielsweise Dihydroxysulfonsäuren wie N,N-Bis-(2-hydroxyäthyl)-2-aminoäthansulfonsäure und N,N-Bis-(2-hydroxyäthyl)3-amino-2-hydroxypropansulfonsäure. Anstelle der Polyole **B** oder in Mischung mit ihnen lassen sich auch Amine mit mindestens zwei primären oder sekundären Aminogruppen oder Mercaptane mit mindestens zwei Mercaptogruppen und jeweils mindestens einer Säuregruppe einsetzen, Beispiele sind Diaminocarbonsäuren wie Ornithin oder Dimercaptosulfonsäuren wie 2,3-Dimercaptopropansulfonsäure, Beispiele für Moleküle mit gemischten mit Isocyanat reaktive Gruppen sind Serin (-OH und -NH₂) und Cystein (-SH und -NH₂).

Die mehrfunktionellen Isocyanate C sind bevorzugt aliphatische lineare, verzweigte und cyclische Isocyanate wie 1,4-Tetramethylendiisocyanat, 1,6-Hexamethylendiisocyanat (HDI), 2,2,4,-und 2,4,4-Trimethylhexandiisocyanat, Dodecamethylendiisocyanat, 1,4-Diisocyanatocyclohexan, 1-Isocyanato-3,3,5-trimethyl-5-isocyanatomethyl-cyclohexan (Isophorondiisocyanat, IPDI) und Bis-(4-isocyanatocyclohexyl)methan (HMDI). Es lassen sich auch solche gemischt aromatisch-aliphatischen Isocyanate einsetzen, bei denen die Isocyanatgruppe an aliphatische Kohlenstoffatome gebunden ist, wie z. B. Tetramethylxylylendiisocyanat. Gleichfalls geeignet sind die durch partielle Reaktion mit Alkoholen und nachfolgende Addition gebildeten Allophanate und die durch partielle Reaktion mit Wasser und nachfolgende Addition gebildeten Biurete, sowie die durch Trimerisieren gebildeten Isocyanurate und die durch Reaktion mit mehrwertigen Alkoholen wie z. B. Trimethylolpropan gebildeten Addukte. Weniger bevorzugt, aber ebenfalls für die Erfindung geeignet sind aromatische Isocyanate, soweit sie in Mischung mit den bevorzugten (cyclo)aliphatischen Isocyanaten eingesetzt werden, insbesondere Diisocyanate wie 4,4'-Diphenylmethandiisocyanat (MDI), 2,4- und 2,6-Toluylendiisocyanat und deren technische Gemische (TDI), sowie 1,3- und 1,4-Phenylendiisocyanat, Diisocyanatonaphthalin und Triphenylmethantriisocyanat, sowie die von diesen abgeleiteten Isocyanurate, Uretdione, Allophanate und Biurete.

Geeignete Kettenverlängerungsmittel **D** sind Verbindungen mit mindestens zwei gegenüber Isocyanat reaktiven Wasserstoffatomen, die in wäßriger Lösung oder Dispersion schneller mit dem Isocyanat reagieren als Wasser. Darunter fallen insbesondere Amine mit mindestens zwei primären oder sekundären oder mindestens einer primären und mindestens einer sekundären Aminogruppe, sowie Dimercaptane und Aminomercaptane mit einer primären oder sekundären Aminogruppe. Bevorzugt werden lineare und verzweigte aliphatische Diamine mit 2 bis 9 Kohlenstoffatomen wie Äthylendiamin, 1-4-Diaminobutan, 1,6-Diaminohexan, 2,2,4- und 2,4,4-Trimethyl-1-6-diaminohexan und Neopentandiamin.

Als Lösungsmittel lassen sich vor allem solche organischen Verbindungen verwenden, die ein ausreichendes Lösevermögen und eine Siedetemperatur unter ca. 120 °C aufweisen, und die nicht selber mit Isocyanaten reagieren. Bevorzugt werden Ketone wie Aceton, Methyläthylketon, Methylisopropylketon und Diäthylketon. Ebenso einsetzbar sind Ester von aliphatischen Alkoholen mit (aliphatischen) Carbonsäuren, wie Äthylacetat, Isopropylacetat, Propylacetat, Isobutylacetat und Dimethylcarbonat.

Die erfindungsgemäßen Polyurethandispersionen werden hergestellt, indem eine Mischung der Polydiene A und der Säuregruppen-haltigen Polyole B in einem inerten Lösungsmittel vorgelegt wird, auf die gewünschte Reaktionstemperatur von 30 bis 100 °C, bevorzugt 50 bis 90 °C, und insbesondere 60 bis 80 °C erwärmt wird. Das Neutralisationsmittel für die Komponente **B** wird gleichzeitig mit dieser zugegeben oder es wird zunächst eine Lösung der Komponente **A** in dem Lösungsmittel hergestellt, zu der dann das Neutralisationsmittel zugesetzt und anschließend erst das Polyol **B** hinzugefügt wird. Die Menge des Neutralisationsmittels wird dabei so bemessen, daß 60 bis 95 % der Säuregruppen des Polyols **B**, bevorzugt 65 bis 90, besonders bevorzugt 70 bis 85 % der Säuregruppen, neutralisiert werden. Zu der Lösung des neutralisierten Polyols **B** und des Polydiens **A** wird anschließend bei der oben genannten Reaktionstemperatur das Isocyanat **C** zugesetzt. Dabei findet üblicherweise ein weiterer Anstieg der Reaktionstemperatur statt. Die Reaktionsmischung wird dann solange bei der gewählten Temperatur unter guter Durchmischen belassen, bis der gewünschte Polymerisationsgrad (bestimmt über den Staudinger-Index *J*₀ des gebildeten Präpolymeren) erreicht ist. Dann wird das Präpolymer in Wasser dispergiert, wobei (bevorzugt) sowohl Wasser zu der Harzlösung zugesetzt werden kann oder umgekehrt (weniger bevorzugt) die Harzlösung in Wasser eingerührt wird. Es ist bevorzugt, das Wasser auf die Reaktionstemperatur oder auf eine Temperatur höchstens 20 °C unter der Reaktionstemperatur, also auf eine Temperatur von ca. 60 °C bis ca. 95 °C, zu erwärmen. Während dieses Mischungsvorgangs wird bevorzugt bereits damit begonnen, die azeotrope Mischung aus Wasser und dem eingesetzten Lösungsmittel abzudestillieren. Sobald die Mischung vollständig ist (d. i. sobald die gesamte Wassermenge in die Harzlösung homogen eingerührt worden ist bzw. die gesamte Harzlösung in das Wasser homogen eingerührt ist), wird das Kettenverlängerungsmittel D zugefügt. Durch die Reaktion des Kettenverlängerungsmittels mit den im Präpolymeren noch vorhandenen Isocyanatgruppen ergibt sich einen weitere Wärmetönung, die die Destillation des Azeotrops unterstützt. Die Reaktionsmischung wird dann weiter beheizt, bis das gesamte eingesetzte Lösungsmittel abdestilliert ist, und eine Dispersion des gebildeten Polyurethans in Wasser verbleibt. Durch Zusatz von weiterem Wasser oder durch Fortsetzen der Destillation kann der Festkörper-Massenanteil auf den gewünschten Wert (bevorzugt ca. 50 % oder mehr) eingestellt werden.

Die erfindungsgemäßen Dispersionen lassen sich insbesondere als Bindemittel für physikalisch trocknende Klarlacke und Mattlacke verwenden. Sie bilden nach dem Trocknen zähelastische Filme mit guter Kratzfestigkeit und mechanischer Beständigkeit sowie geringer Wasseraufnahme. Die so gebildeten Filme lassen sich wegen ihrer hohen Zähigkeit und hohen Weiterreißfestigkeit verbunden mit der die Adhäsion übertreffende Kohäsion als Ganzes von damit beschichteten Substraten abziehen. Dickere Beschichtungen, die durch aufeinanderfolgendes mehrfaches Auftragen hergestellt werden, neigen nicht zum Delaminieren. Von besonderem Vorteil ist die gute chemische und physikalische Beständigkeit.

Die nachfolgenden Beispiele erläutern die Erfindung.

### Beispiele

### Beispiel 1

In einem 2 1-Glaskolben wurden 302,3 g Polybutadiendiol (®PolyBD R45HT, Atofina) vorgelegt und in 340 g Methyläthylketon (MEK) gelöst. Zu dieser Mischung wurden 9,5 g Triäthylamin und 17,9 g Dimethylolpropionsäure zugegeben und gelöst. Dabei wurde die Mischung auf 70 °C erwärmt. Bei dieser Temperatur wurde zu der klaren Lösung 89,9 g Isophorondiisocyanat hinzugegeben. Dabei erwärmte sich die Mischung auf 80 °C. Diese Temperatur wurde so lange gehalten, bis der Staudinger-Index *J*₀ ("Grenzviskositätszahl") des Polyurethans, gemessen in einer Lösung von Methyläthylketon und Chloroform bei 20 °C, wobei zunächst durch Zusatz von Methyläthylketon auf einen Konzentration von 50 g in 100 g Lösung verdünnt wurde, und anschließend durch Zugabe von Chloroform bis zu einer Konzentration von 1 g in 100 g Lösung weiter verdünnt wurde, einen Wert von 24,5 cm³/g erreicht hatte. Dann wurde die Harzlösung in 708 g zuvor auf 80 °C erwärmten Wasser innerhalb von 5 bis 10 min dispergiert. Während der Dispergierung wurde damit begonnen, das entstehende Azeotrop MEK/Wasser abzudestillieren. Gleich nach Ende der Wasserzugabe wurde innerhalb von ca. 5 min eine Lösung aus 6,8 g Äthylendiamin in 60 g Wasser zudosiert. Dabei trat eine Wärmetönung auf, die zu einer Steigerung der Temperatur um ca. 3 bis 4 °C führte, und die die Destillation des Azeotrops stark förderte. Die Destillation wurde danach unter gelindem Zuheizen so lange fortgesetzt, bis insgesamt 340 g MEK und 360 g Wasser abdestilliert waren. Nach dem Abkühlen auf Raumtemperatur erhielt man eine weißlich opake Dispersion mit einem Festkörper-Massenanteil von ca. 50 % und einer Viskosität von ca. 500 bis 1000 mPa·s. Der pH-Wert dieser Dispersion lag bei ca. 7,5.

Die gemäß der Erfindung hergestellte Dispersion hatte eine ausgezeichnete Lagerstabilität und zeigte während einer Lagerzeit von bis zu 28 Tagen keinen Viskositätsaufbau und kein Vergelen. Die Viskosität der Dispersion unmittelbar nach der Herstellung betrug ca. 700 mPa·s, nach 7 Tagen wurde ca. 600 mPa·s, nach 14 Tagen ca. 550 mPa·s, und nach 28 Tagen ca. 560 mPa·s gemessen.

### Beispiel 2 (Vergleichsbeispiel, gemäß der Anmeldung FR 2776662, Bsp. A)

In einem 2 1-Glaskolben wurden 11,1 g Dimethylolpropionsäure, 8,4 g Triäthylamin, 0,4 g Dibutylzinndilaurat und 200 g Methyläthylketon gemischt, bis sich einen klare Lösung gebildet hatte. 243 g ®PolyBD R 45 HT, die vor der Zugabe eine Stunde bei 80 °C unter vermindertem Druck (5 mbar = 5 hPa = 500 Pa) von gelösten Gasen befreit worden waren, wurden auf ca. 40 °C abgekühlt, dieser Masse wurde dann die im ersten Schritt hergestellte Lösung aus Dimethylolpropionsäure, Triäthylamin und Methyläthylketon nebst Katalysator zu gesetzt, gemeinsam mit weiteren 290 g des Lösungsmittels MEK. Der homogenisierten Mischung wurde sodann 64, 2 g Isophorondiisocyanat zugesetzt, dabei wurde die Mischung bis zum Sieden des Lösungsmittels MEK erhitzt. Die Reaktionsmischung wurde 4 Stunden bei dieser Temperatur gehalten.

Das gebildete Präpolymer zeigt eine niedrige Viskosität von ca. 30 mPa·s unmittelbar nach der Herstellung, die Viskosität steigt bei der Lagerung deutlich an und erreicht nach einer Woche ca. 85 mPa·s und nach 2 Wochen ca. 735 mPa·s.

In eine Vorlage von 247 g Wasser bei Raumtemperatur wurde das Präpolymer während 90 Minuten unter intensivem Rühren zugetropft. Anschließend wurden 1,93 g Hydrazinhydrat gleichfalls unter gutem Rühren zugetropft; es wurde ca. 5 Minuten nachgerührt. Das Lösungsmittel MEK wurde durch Abdestillieren unter vermindertem Druck an einem Rotationsverdampfer entfernt, die zurückgebliebene Dispersion wurde durch ein Filtertuch (100 µm Porenweite) filtriert. Die erhaltene Dispersion wies einen Festkörper-Massenanteil von ca. 35 % auf.
- Ergebnis des Vergleichs:: Die Polyurethandispersionen gemäß der vorliegenden Erfindung lassen sich mit einem deutlich höheren Festkörper-Massenanteil herstellen, ohne daß bei Lagerung Probleme durch Viskositätsanstieg oder Sedimentation auftreten. Anstelle des (toxischen) Hydrazins lassen sich erfindungsgemäß Diamine als Kettenverlängerungsmittel einsetzen. Ersetzt man im Vergleichsbeispiel 2 das Hydrazinhydrat durch Äthylendiamin, so neigt die erhaltene Dispersion selbst bei dem geringeren Festkörper-Massenanteil zum Vergelen.

## Patentansprüche

1. Lagerstabile Polyurethan-Dispersionen, herstellbar durch Umsetzung von Polydienen **A**, die mindestens zwei mit Isocyanaten reaktive Gruppen tragen, Polyolen **B**, die mindestens eine Säuregruppe tragen, mehrfunktionellen Isocyanaten **C** und Kettenverlängerungsmitteln **D**, **dadurch gekennzeichnet, daß** die Säuregruppen der Polyole **B** zu einem Anteil von 60 bis 95 % neutralisiert sind.

2. Lagerstabile Polyurethan-Dispersionen nach Anspruch 1, **dadurch gekennzeichnet, daß** als Komponente **A** Polydiene mit mindestens zwei Hydroxylgruppen eingesetzt werden.

3. Lagerstabile Polyurethan-Dispersionen nach Anspruch 1, **dadurch gekennzeichnet, daß** als Komponente **A** Polydiene enthaltend Bausteine abgeleitet von Butadien, Isopren, 1,3-Pentadien, Chloropren und/oder Cyclopentadien eingesetzt werden.

4. Lagerstabile Polyurethan-Dispersionen nach Anspruch 1, **dadurch gekennzeichnet, daß** als Komponente **A** Polybutadiendiole eingesetzt werden.

5. Lagerstabile Polyurethan-Dispersionen nach Anspruch 1, **dadurch gekennzeichnet, daß** als Komponente **B** Diole mit mindestens einer Säuregruppe eingesetzt werden.

6. Lagerstabile Polyurethan-Dispersionen nach Anspruch 1, **dadurch gekennzeichnet, daß** als Komponente **C** aliphatische lineare, verzweigte oder cyclische Isocyanate mit mindestens zwei Isocyanatgruppen pro Molekül eingesetzt werden.

7. Verfahren zur Herstellung von lagerstabilen Polyurethandispersionen durch Umsetzung von Polydienen **A**, die mindestens zwei mit Isocyanaten reaktive Gruppen tragen, Polyolen **B**, die mindestens eine Säuregruppe tragen, und mehrfunktionellen Isocyanaten **C** zu einem Präpolymeren, Dispersion dieses Präpolymeren in Wasser und anschließende Reaktion mit Kettenverlängerungsmitteln **D, dadurch gekennzeichnet, daß** die Säuregruppen der Polyole **B** zu einem Anteil von 60 bis 95 % neutralisiert sind.

8. Verfahren nach Anspruch 7, **dadurch gekennzeichnet, daß** die Neutralisation der Säuregruppen des Polyols **B** vor der Zugabe der Isocyanate **C** vorgenommen wird.

9. Verfahren nach Anspruch 7, **dadurch gekennzeichnet, daß** das Präpolymer in Wasser mit einer Temperatur von 60 bis 95 °C dispergiert wird.

10. Verwendung von wäßrigen Polyurethandispersionen nach Anspruch 1 zur Herstellung von Beschichtungsmitteln.

11. Elastische Beschichtungen, herstellbar durch Beschichten von steifen oder flexiblen Substraten mit Beschichtungsmitteln, die eine wäßrige Polyurethandispersion nach Anspruch 1 enthalten.

## Claims

1. A storage-stable polyurethane dispersion obtained by reacting polydienes **A** which carry at least two isocyanate-reactive groups, polyols **B** which carry at least one acid group, polyfunctional isocyanates **C** and chain extenders **D**, wherein the acid groups of the polyols **B** are neutralized to a fraction of from 60 to 95%.

2. The storage-stable polyurethane dispersion as claimed in claim 1, wherein polydienes containing at least two hydroxyl groups are used as component **A.**

3. The storage-stable polyurethane dispersion as claimed in claim 1, wherein polydienes containing units derived from butadiene, isoprene, 1,3-pentadiene, chloroprene and/or cyclopentadiene are used as component **A.**

4. The storage-stable polyurethane dispersion as claimed in claim 1, wherein polybutadiene diols are used as component **A.**

5. The storage-stable polyurethane dispersion as claimed in claim 1, wherein diols containing at least one acid group are used as component **B.**

6. The storage-stable polyurethane dispersion as claimed in claim 1, wherein aliphatic linear, branched or cyclic isocyanates containing at least two isocyanate groups per molecule are used as component **C**.

7. A process for preparing storage-stable polyurethane dispersions by reacting polydienes **A** which carry at least two isocyanate-reactive groups, polyols **B** which carry at least one acid group, and polyfunctional isocyanates **C** to give a prepolymer, dispersing this prepolymer in water and then reacting it with chain extenders **D**, wherein the acid groups of the polyols **B** are neutralized to a fraction of from 60 to 95%.

8. The process as claimed in claim 7, wherein the neutralization of the acid groups of the polyol **B** is performed prior to the addition of the isocyanates **C**.

9. The process as claimed in claim 7, wherein the prepolymer is dispersed in water with a temperature of from 60 to 95°C.

10. A methof of use of the aqueous polyurethane dispersion as claimed in claim 1, comprising mixing the polyurethane dispersions with one or more of additives, fillers, extruders, and pigments.

11. An elastic coating prepared by coating rigid or flexible substrates with coating compositions comprising an aqueous polyurethane dispersion as claimed in claim 1.

## Revendications

1. Dispersions de polyuréthannes stables au stockage, pouvant être préparées par réaction de polydiènes A portant au moins deux groupes réactifs vis-à-vis des isocyanates, de polyols B qui portent au moins un groupe acide, d'isocyanates multifonctionnels C, et d'agents d'extension de chaîne D, **caractérisées en ce que** les groupes acides des polyols B sont neutralisés à raison de 60 à 95 %.

2. Dispersions de polyuréthannes stables au stockage selon la revendication 1, **caractérisées en ce qu'**on utilise en tant que composant A des polydiènes ayant au moins deux groupes hydroxyle.

3. Dispersions de polyuréthannes stables au stockage selon la revendication 1, **caractérisées en ce qu'**on utilise en tant que composant A des polydiènes contenant des éléments qui dérivent du butadiène, de l'isoprène, du 1,3-pentadiène, du chloroprène et/ou du cyclopentadiène.

4. Dispersions de polyuréthannes stables au stockage selon la revendication 1, **caractérisées en ce qu'**on utilise en tant que composant A des polybutadiènediols.

5. Dispersions de polyuréthannes stables au stockage selon la revendication 1, **caractérisées en ce qu'**on utilise en tant que composant B des diols ayant au moins un groupe acide.

6. Dispersions de polyuréthannes stables au stockage selon la revendication 1, **caractérisées en ce qu'**on utilise en tant que composant C des isocyanates aliphatiques cycliques ou à chaîne linéaire ou ramifiée ayant par molécule au moins deux groupes isocyanate.

7. Procédé de préparation de dispersions de polyuréthannes stables au stockage par réaction de polydiènes A qui portent au moins deux groupes réactifs vis-à-vis des isocyanates, de polyols B qui portent au moins un groupe acide, et d'isocyanates multifonctionnels C, pour obtenir un prépolymère, dispersion de ce prépolymère dans l'eau, puis réaction avec des agents d'extension de chaîne D, **caractérisé en ce que** les groupes acides des polyols B sont neutralisés à raison de 60 à 95 %.

8. Procédé selon la revendication 7, **caractérisé en ce que** la neutralisation des groupes acides du polyol B est réalisée avant l'addition des isocyanates C.

9. Procédé selon la revendication 7, **caractérisé en ce que** le prépolymère est dispersé dans l'eau à une température de 60 à 95°C.

10. Utilisation de dispersions aqueuses de polyuréthannes selon la revendication 1 pour préparer des compositions de revêtement.

11. Revêtements élastiques pouvant être préparés par application, sur des substrats rigides ou souples, de compositions de revêtement qui contiennent une dispersion aqueuse de polyuréthannes selon la revendication 1.
